# EUROPEAN PATENT SPECIFICATION

(11) **EP 3 453 908 B1**
(45) Date of publication and mention of the grant of the patent: **17.02.2021**
(21) Application number: 17792706.8
(22) Date of filing: 24.04.2017
(51) Int. Cl.: F16D 55/227

(54) **VEHICULAR DISC BRAKE**
FAHRZEUGSCHEIBENBREMSE
FREIN À DISQUE POUR VÉHICULE

(30) Priority: 06.05.2016 JP 2016093230
(43) Date of publication of application: 13.03.2019
(73) Proprietor: Nissin Kogyo Co., Ltd., Tomi-city Nagano 389-0514 (JP)
(72) Inventor: ATSUTA, Daiki, Tomi-city Nagano 389-0514 (JP)
(74) Representative: Hoefer & Partner Patentanwälte mbB
(86) International application number: PCT/JP2017/016235
(87) International publication number: WO 2017/191773

(56) References cited:
- EP-A1- 2 397 718
- CN-A- 105 314 044
- FR-A1- 2 991 427
- JP-A- 2010 185 500
- JP-A- 2015 055 260
- JP-B2- 4 250 123
- US-A1- 2009 243 377

## Description

### Technical Field

The present invention relates to a vehicle disc brake, more particularly to a vehicle disc brake provided with three or more boss parts each having a union hole or boss parts each having a bleeder hole in parallel on a disc outer peripheral side of an action part of a caliper body.

### Background Art

Conventionally, there is a vehicle disc brake provided with, in parallel, three boss parts having union holes through which an operating fluid is supplied or boss parts having bleeder holes through which air included in an operating fluid in a hydraulic pressure path is exhausted on a disc outer peripheral side of an action part of a caliper body and has one such boss part projecting at one end in a disc rotational direction of the caliper body (see PTL 1, for example) or a vehicle disc brake provided with, in parallel, four such boss parts on a disc outer peripheral side of the action part (see PTL 2, for example).

From EP 2 397 718 A1, a caliper body for a two-system disc brake for a vehicle is known, in which a communication path, which connects cylinder holes for a first brake system, and a first bleeder hole are formed rectilinearly on an outside, in a disc radius direction, of an imaginary line which rectilinearly connects inner edges, in the disc radius direction, of cylinder holes for a first brake system and a cylinder hole for a second brake system that is provided on an outside, in the disc radius direction, of the communication path.

From JP 2010 185500 A, a caliper body for a dual line type vehicular disk brake is known which is arranged with a second brake line cylinder hole while being offset to a disk radial-directional outside from first brake line cylinder holes located on both sides of the hole. A piston seal groove fitted thereinto with a piston seal is formed in each of the cylinder holes, and the disk circumferential-directional adjacent piston seal grooves are formed with a shift in a disk axial direction, and are formed overlappedly in a disk circumferential direction.

### Citation List

### Patent Literature

PTL 1: Japanese Patent No. 4988637
PTL 2: Japanese Patent No. 4474474

### Summary of Invention

### Technical Problem

However, since three or more boss parts are provided in parallel on the disc outer peripheral side of the action part disclosed in the patent documents described above, when a bleeder screw or a banjo bolt is screwed into an intermediate boss part other than those disposed at both ends in the disc rotational direction, a tool interferes with an adjacent boss part, the movable range becomes small, and workability thereby becomes poor.

Accordingly, an object of the invention is to provide a vehicle disc brake in which a bleeder screw or a banjo bolt can be satisfactorily screwed into a boss part with a union hole or a boss part with a bleeder hole that are provided in a caliper body.

### Solution to Problem

To achieve the above object, a vehicle disc brake according to the invention has, on a disc outer peripheral side of an action part of a caliper body having a cylinder hole into which a piston is inserted, boss parts each having a union hole through which a pressurized operating fluid is introduced to a hydraulic chamber provided between a bottom of the cylinder hole and the piston and boss parts each having a bleeder hole through which air included in an operating fluid is exhausted, a total number of the boss parts each having the union hole and the boss parts each having the bleeder hole provided in parallel being three or more, in which at least two boss parts disposed at both ends in a disc rotational direction are provided closer to a disc rotor than the other boss parts.

In addition, each of the boss parts each having the bleeder hole is provided with a bearing surface for a bleeder screw to be screwed into the bleeder hole, a banjo bolt is screwed into each of the boss parts each having the union hole via a banjo having a hose connection part, each of the boss parts each having the union hole is provided with a bearing surface for the banjo bolt to be screwed into the union hole, the bearing surface for the banjo bolt being disposed outward in a disc radial direction of the banjo, and the bearing surface of the boss part disposed at one end in the disc rotational direction and the bearing surface of the boss part disposed at the other end in the disc rotational direction project outward in the disc radial direction of the bearing surface of the boss part adjacent thereto.

In addition, preferably, the boss part disposed at the other end in the disc rotational direction is the boss part having the union hole and a space capable of housing the hose connection part of the banjo is provided between the bleeder screw or the banjo bolt provided in the boss part adjacent thereto and an outer surface of the caliper body.

In addition, preferably, the boss part disposed at the one end in the disc rotational direction is the boss part having the union hole and the banjo has a rotation stopper projecting therefrom, the rotation stopper locking the banjo by making contact with the boss part adjacent thereto.

### Advantageous Effects of Invention

In the vehicle disc brake according to the invention, since the boss parts disposed at both ends in the disc rotational direction are provided closer to the disc rotor than the other boss parts disposed in intermediate positions among three or more boss parts provided in parallel on the disc outer peripheral side of the action part of the caliper body, when the bleeder screws or the banjo bolts are screwed into the other boss parts disposed in the intermediate positions using a tool such as a box wrench, the movable range within which the tool does not interfere with an adjacent boss part can be extended, thereby enabling improvement of workability.

In addition, since the bearing surface of the boss part disposed on one end side in the disc rotational direction projects outward in the disc radial direction of the bearing surface of an adjacent boss part, when the bleeder screw or the banjo bolt is screwed into the boss part disposed on one end side in the disc rotational direction, the tool does not interfere with the adjacent boss part and workability can be improved.

In addition, since the boss part disposed on the other end side in the disc rotational direction is the boss part having the union hole and has a space in which the hose connection part of the banjo can be disposed between the bleeder screw or the banjo bolt provided in the adjacent boss part and the outer surface of the caliper body, the hydraulic pressure pipe to be connected to the hose connection part can be extended from the boss part disposed on the other end side in the disc rotational direction to the disc rotor side and the tool does not interfere with the hydraulic pressure pipe when the bleeder screw or the banjo bolt is screwed into the adjacent boss part.

In addition, since the boss part disposed on one end side in the disc rotational direction is the boss part having the union hole and the banjo has a rotation stopper that locks the banjo by making contact with the adjacent boss part, the banjo bolt can be satisfactorily attached to the boss part.

### Brief Description of Drawings

[Fig. 1] Fig. 1 is a plan view illustrating a vehicle disc brake according to a first embodiment of the invention.
[Fig. 2] Fig. 2 is a cross sectional view taken along line II-II in Fig. 1.
[Fig. 3] Fig. 3 is a front view illustrating the vehicle disc brake according to the first embodiment of the invention.
[Fig. 4] Fig. 4 is a cross sectional view taken along line IV-IV in Fig. 3.
[Fig. 5] Fig. 5 is a front view illustrating a vehicle disc brake according to a second embodiment of the invention.
[Fig. 6] Fig. 6 is a plan view illustrating this vehicle disc brake.

### Description of Embodiments

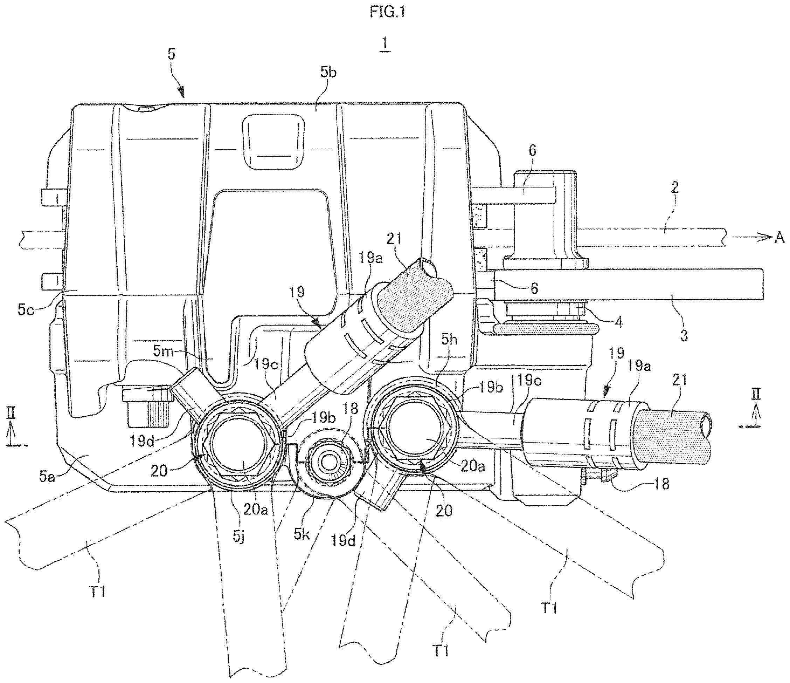

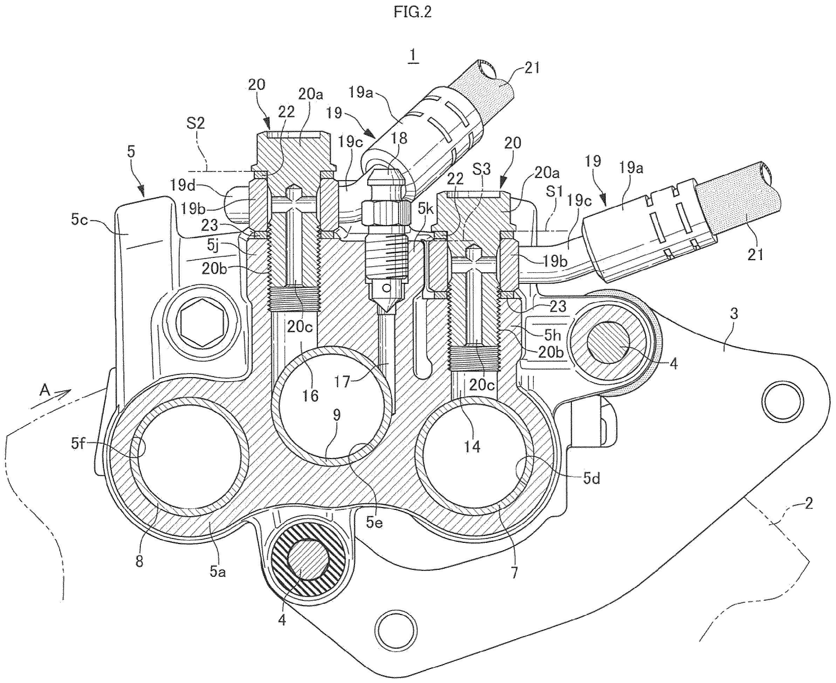

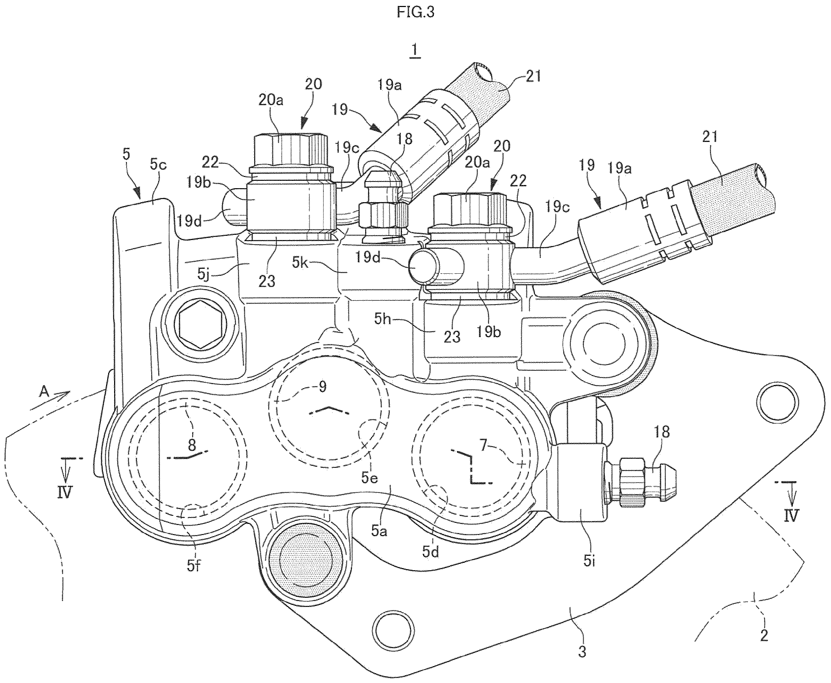

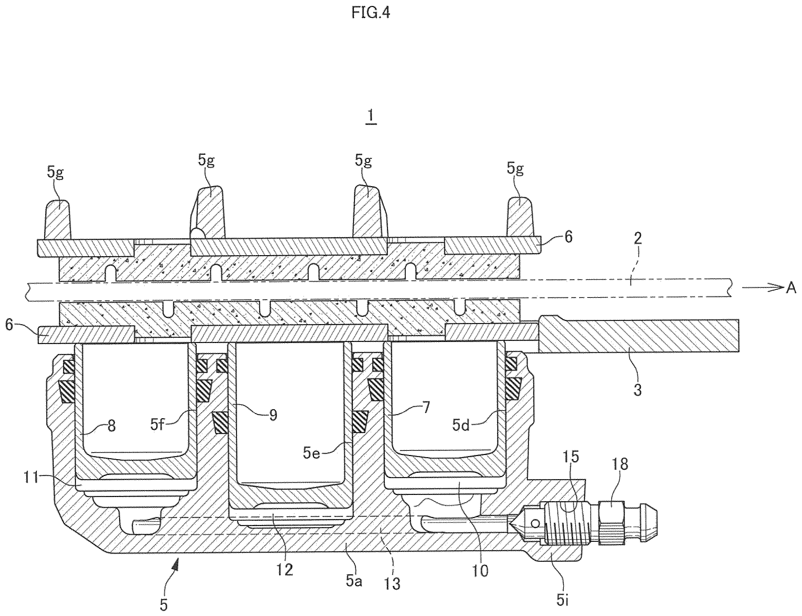

Fig. 1 to Fig. 4 illustrate the vehicle disc brake according to the first embodiment of the invention, an arrow A indicates the rotary direction of a disc rotor that rotates together with wheels when the vehicle moves forward, and a disc turn-out side and a disc turn-in side are those seen when the vehicle moves forward.

A vehicle disc brake 1 according to the embodiment includes a caliper bracket 3 fixed to the vehicle body on one side of a disc rotor 2, a caliper body 5 supported by the caliper bracket 3 via a pair of sliding pins 4 and 4, and a pair of friction pads 6 and 6 disposed facing each other on both sides of the disc rotor 2.

The caliper body 5 includes an action part 5a and a reaction part 5b that are provided on both sides of the disc rotor 2 and a bridge section 5c that couples the action part 5a and the reaction part 5b to each other across the outer periphery of the disc rotor 2 and the caliper body 5 is of three-pot two-system type in which three cylinder holes 5d, 5e, and 5f formed in the action part 5a are divided into two hydraulic pressure systems. The action part 5a is provided with the cylinder holes 5d, 5e, and 5f in parallel so that openings thereof face the disc rotor and the reaction part 5b is provided with four reaction force pawls 5g.

In the cylinder holes 5d, 5e, and 5f, the cylinder hole 5d on the disc turn-out side and the cylinder hole 5f on the disc turn-in side are formed inward in the disc radial direction and the cylinder hole 5e in the middle is formed outward in the disc radial direction. A piston 7 is inserted into the cylinder hole 5d on the disc turn-out side, a piston 8 is inserted into the cylinder hole 5f on the disc turn-in side, and a piston 9 is inserted into the cylinder hole 5e in the middle. Hydraulic chambers 10, 11, and 12 are defined between the pistons 7, 8, and 9 and the cylinder holes 5d, 5e, and 5f, respectively, and the hydraulic chambers 10 and 11 defined between the cylinder holes 5d and 5f on the disc turn-out side and the disc turn-in side, which are cylinder holes for a single brake system, and the pistons 7 and 8, respectively, communicate with each other via a communication line 13.

A first union boss part 5h (boss part of the invention) projects on the disc turn-out side outward in the disc radial direction of the action part 5a and a first bleeder boss part 5i projects in the end part on the disc turn-out side inward in the disc radial direction. In addition, a second union boss part 5j (boss part of the invention) projects on the disc turn-in side outward in the disc radial direction and a second bleeder boss part 5k (boss part of the invention) projects in the middle in the disc peripheral direction outward in the disc radial direction.

The first union boss part 5h is provided with a first union hole 14 that communicates with the cylinder hole 5d on the disc turn-out side, the first bleeder boss part 5i is provided with a first bleeder hole 15 that communicates with the cylinder hole 5d on the disc turn-out side, the second union boss part 5j is provided with a second union hole 16 that communicates with the cylinder hole 5e in the middle, and the second bleeder boss part 5k is provided with a second bleeder hole 17 that communicates with the cylinder hole 5e in the middle. The first union hole 14, the second union hole 16, and the second bleeder hole 17 are formed so as to have axial lines parallel to each other and positioned in the vicinity of the first union boss part 5h, the second union boss part 5j, and the second bleeder boss part 5k, respectively.

Bleeder screws 18 are screwed into the first bleeder hole 15 and the second bleeder hole 17 provided in the first bleeder boss part 5i and the second bleeder boss part 5k, respectively, and the bearing surfaces for the bleeder screws 18 are formed on front end surfaces of the first bleeder boss part 5i and the second bleeder boss part 5k, respectively.

Banjo bolts 20 are screwed into the first union hole 14 and the second union hole 16, respectively, provided in the first union boss part 5h and the second union boss part 5j via banjoes 19. Each of the banjoes 19 is attached to a front end part of a flexible hydraulic pressure pipe 21 and includes a fixed pipe 19a (hose connection part of the invention) swaged and fixed to an end part of the hydraulic pressure pipe 21, a ring body 19b fixed by the banjo bolt 20 to the first union hole 14 or the second union hole 16 via washers 22 and 23, a small-diameter neck pipe 19c (hose connection part of the invention) connecting these components, and a rotation stopper 19d projecting from the peripheral wall of the ring body 19b, and the ring body 19b has a hydraulic passage that communicates with the fixed pipe 19a and the neck pipe 19c. In addition, the washer 22 disposed on the front end surface of the ring body 19b is a bearing surface for the banjo bolt 20. The banjo bolt 20 has a male threaded part 20b in an end part of the shaft part projecting from a hexagonal head 20a and a liquid passing hole 20c that communicates with the hydraulic chamber 10 or the hydraulic chamber 12 and a hydraulic passage provided in the ring body 19b is formed in the shaft part.

In the first union boss part 5h, the second union boss part 5j, and the second bleeder boss part 5k provided in parallel outward in the disc radial direction of the caliper body 5, the first union boss part 5h disposed on the disc turn-out side and the second union boss part 5j disposed on the disc turn-in side are disposed closer to the disc rotor than the second bleeder boss part 5k disposed in the middle. In addition, a bearing surface position S1 of the banjo bolt 20 attached to the first union boss part 5h and a bearing surface position S2 of the banjo bolt 20 attached to the second union boss part 5j project outward in the disc radial direction of a bearing surface position S3 of the bleeder screw 18 attached to the second bleeder boss part 5k. In addition, there is a space in which the neck pipe 19c and the fixed pipe 19a of the banjo 19 attached to the second union boss part 5j can be disposed between the bleeder screw 18 attached to the second bleeder boss part 5k and the outer surface of the caliper body 5.

When the banjo 19 and the banjo bolt 20 are attached to the first union boss part 5h, the banjo bolt 20 to which the washers 22 and 23 and the banjo 19 have been assembled is screwed into the first union hole 14 using a tool T1 such as a box wrench. At this time, since the first union boss part 5h is formed closer to the disc rotor than the second bleeder boss part 5k adjacent thereto and the bearing surface position S1 of the banjo bolt 20 provided in the first union boss part 5h projects outward in the disc radial direction of the bearing surface position S3 of the bleeder screw 18 provided in the second bleeder boss part 5k, the movable range of the tool T1 can be ensured. In addition, since the rotation stopper 19d makes contact with the second bleeder boss part 5k to lock the banjo 19, the banjo bolt 20 can be satisfactorily screwed into the first union hole 14.

When the banjo 19 and the banjo bolt 20 are attached to the second union boss part 5j, the banjo bolt 20 to which the washers 22 and 23 and the banjo 19 have been assembled in advance is screwed into the second union hole 16 using the tool T1 as in attachment to the first union boss part 5h. At this time, since the second union boss part 5j is formed closer to the disc rotor than the second bleeder boss part 5k adjacent thereto and the bearing surface position S2 of the banjo bolt 20 provided in the second union boss part 5j projects outward of the bearing surface position S3 of the bleeder screw 18 provided in the second bleeder boss part 5k, the movable range of the tool T1 can be ensured. In addition, since the rotation stopper 19d makes contact with a protrusion 5m formed in the caliper body 5 to lock the banjo 19, the banjo bolt 20 can be satisfactorily screwed into the second union hole 16, and there is a space in which the neck pipe 19c and the fixed pipe 19a of the banjo 19 can be disposed between the bleeder screw 18 and the outer surface of the caliper body 5, the hydraulic pressure pipe 21 can be extended from the second union boss part 5j toward the disc rotor.

In addition, when the bleeder screw 18 is attached to the second bleeder boss part 5k using the tool T1, since the second bleeder boss part 5k disposed farther away from the disc rotor than the first union boss part 5h and the second union boss part adjacent thereto, the movable range of the tool T1 can be ensured. In addition, since the hydraulic pressure pipe 21 to be connected to the second union boss part 5j extends from the second union boss part 5j toward the disc rotor, the tool T1 does not interfere with the hydraulic pressure pipe 21 when the bleeder screw 18 is attached.

As described above, since the banjo 19 and the banjo bolt 20 can be satisfactorily assembled to the first union boss part 5h and the second union boss part 5j and the bleeder screw 18 can be satisfactorily assembled to the second bleeder boss part 5k, workability can be improved.

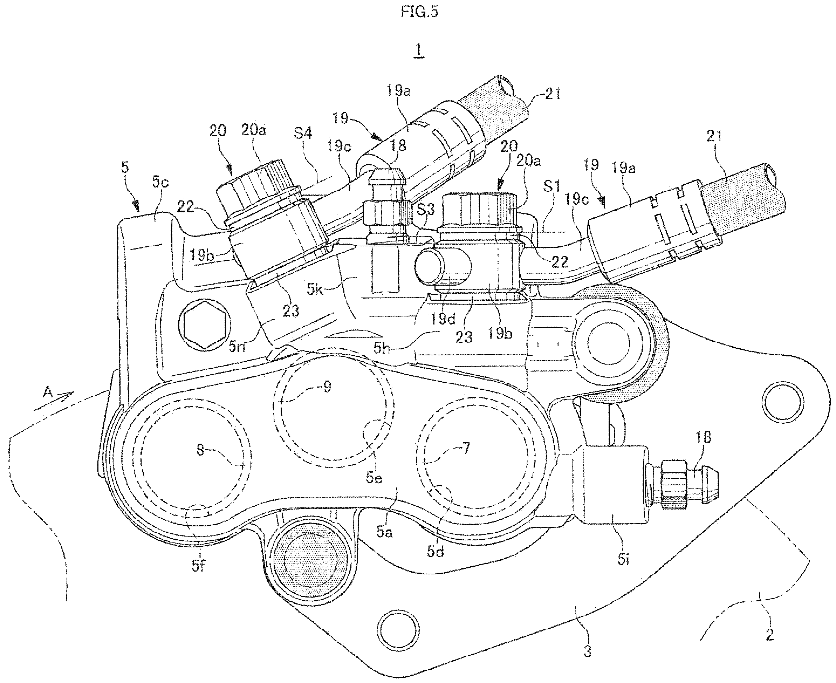

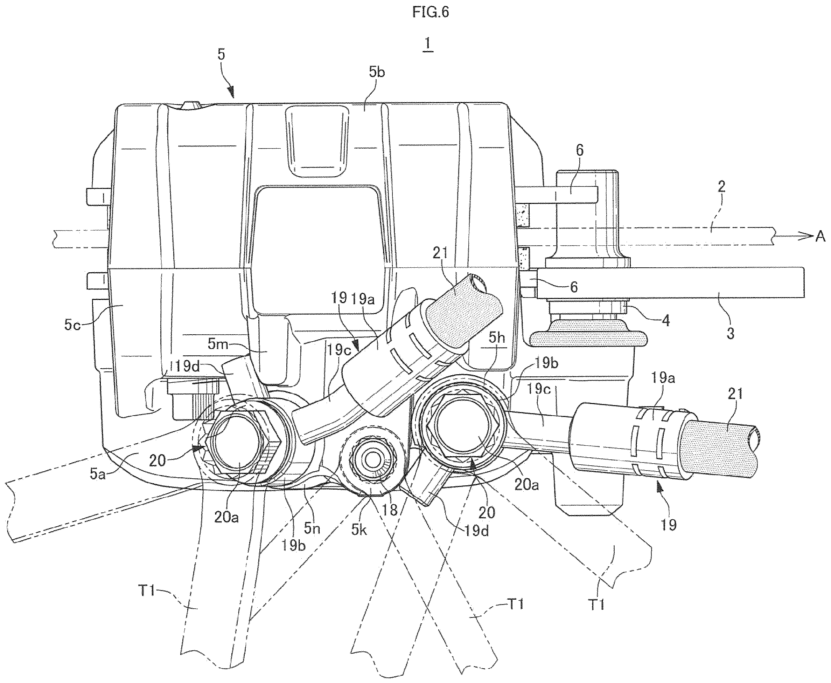

Fig. 5 and Fig. 6 illustrate the second embodiment of the invention and the same components as in the first embodiment are given the same reference numerals and detailed descriptions are omitted.

In the caliper body 5 according to the embodiment, the front end side of a second union boss part 5n is inclined toward the disc turn-in side as compared with the first union boss part 5h and the second bleeder boss part 5k. In addition, the second union boss part 5n is formed closer to the disc rotor than the second bleeder boss part 5k adjacent thereto and a bearing surface position S4 of the banjo bolt 20 provided in the second union boss part 5n projects outward in the disc radial direction of the bearing surface position S3 of the bleeder screw 18 provided in the second bleeder boss part 5k.

It should be noted here that the invention is not limited to the embodiments described above and two union boss parts and two bleeder boss parts may be provided in parallel with each other outward in the disc radial direction of the caliper body. In this case, the two boss parts disposed at both ends in the disc rotational direction are provided closer to the disc rotor than the two other boss parts disposed in the intermediate parts. In addition, the caliper body used in the vehicle disc brake according to the invention does not need to have three pots unlike the embodiments described above and may have two pots or four or more pots. In addition, the invention is not limited to a two-system type vehicle disc brake having a single brake system that operates either front wheels or rear wheels and a ganged brake system that operates both front wheels and rear wheels.

### Reference Signs List

- 1:: vehicle disc brake
- 2:: disc rotor
- 3:: caliper bracket
- 4:: sliding pin
- 5:: caliper body
- 5a:: action part
- 5b:: reaction part
- 5c:: bridge section
- 5d, 5e, 5f:: cylinder hole
- 5g:: reaction force pawl
- 5h:: first union boss part
- 5i:: first bleeder boss part
- 5j:: second union boss part
- 5k:: second bleeder boss part
- 5m:: protrusion
- 5n:: second union boss part
- 6:: friction pad
- 7, 8, 9:: piston
- 10, 11, 12:: hydraulic chamber
- 13:: communication line
- 14:: first union hole
- 15:: first bleeder hole
- 16:: second union hole
- 17:: second bleeder hole
- 18:: bleeder screw
- 19:: banjo
- 19a:: fixed pipe
- 19b:: ring body
- 19c:: neck pipe
- 19d:: rotation stopper
- 20:: banjo bolt
- 20a:: hexagonal head
- 20b:: male threaded part
- 20c:: liquid passing hole
- 21:: hydraulic pressure pipe
- 22, 23:: washer

## Claims

1. A vehicle disc brake (1) having, on a disc (2) outer peripheral side of an action part (5a) of a caliper body (5) having a cylinder hole (5d, 5e, 5f) into which a piston (7, 8, 9) is inserted, boss parts (5h, 5j, 5n) each having a union hole (14, 16) through which a pressurized operating fluid is introduced to a hydraulic chamber (10, 11, 12) provided between a bottom of the cylinder hole (5d, 5e, 5f) and the piston (7, 8, 9) and boss parts (5k) each having a bleeder hole (17) through which air included in an operating fluid is exhausted, a total number of the boss parts (5h, 5j, 5n) each having the union hole (14, 16) and the boss parts (5k) each having the bleeder hole (17) provided in parallel being three or more,
wherein at least two boss parts (5h, 5j, 5n) disposed at both ends in a disc rotational direction are provided closer to a disc rotor than the other boss parts (5k), and
wherein each of the boss parts (5k) each having the bleeder hole (17) is provided with a bearing surface (S3) for a bleeder screw (18) to be screwed into the bleeder hole (17), a banjo bolt (20) is screwed into each of the boss parts (5h, 5j, 5n) each having the union hole (14, 16) via a banjo (19) having a hose connection part (19a), each of the boss parts (5h, 5j, 5n) each having the union hole (14, 16) is provided with a bearing surface (S1, S2) for the banjo bolt (20) to be screwed into the union hole (14, 16), the bearing surface (S1, S2) for the banjo bolt (20) being disposed outward in a disc radial direction of the banjo (19), **characterized in that**
the bearing surface (S1) of the boss part (5h) disposed at one end in the disc rotational direction and the bearing surface (S2) of the boss part (5j, 5n) disposed at the other end in the disc rotational direction project outward in the disc radial direction of the bearing surface (S3) of the boss part (5k) adjacent thereto.

2. The vehicle disc brake (1) according to claim 1,
wherein the boss part (5j, 5n) disposed at the other end in the disc rotational direction is the boss part (5j, 5n) having the union hole (14, 16) and a space capable of housing the hose connection part (19a) of the banjo (19) is provided between the bleeder screw (18) or the banjo bolt (20) provided in the boss part (5k) adjacent thereto and an outer surface of the caliper body (5).

3. The vehicle disc brake (1) according to claim 1 or 2,
wherein the boss part (5h) disposed at the one end in the disc rotational direction is the boss part (5h) having the union hole (14, 16) and the banjo (19) has a rotation stopper (19d) projecting therefrom, the rotation stopper (19d) locking the banjo (19) by making contact with the boss part (5k) adjacent thereto.

## Patentansprüche

1. Fahrzeugscheibenbremse (1) die, an einer Außenumfangsseite einer Scheibe (2) eines Aktionselement (5a) eines Bremssattelkörpers (5) mit einer Zylinderöffnung (5d, 5e, 5f), in die ein Kolben (7, 8, 9) eingesetzt ist, Nabenelemente (5h, 5j, 5n), die jeweils eine Verbindungsöffnung (14, 16) aufweisen, durch die eine unter Druck stehende Betriebsflüssigkeit in eine Hydraulikkammer (10, 11, 12) eingeleitet wird, die zwischen einem Boden der Zylinderöffnung (5d, 5e, 5f) und dem Kolben (7, 8, 9) vorgesehen ist, und Nabenelemente (5k) umfasst, die jeweils eine Entlüftungsöffnung (17) aufweisen, durch die in einer Betriebsflüssigkeit enthaltene Luft entleert wird, wobei eine Gesamtanzahl der Nabenelemente (5h, 5j, 5n), die jeweils die Verbindungsöffnung (14, 16) aufweisen, und der Nabenelemente (5k), die jeweils die parallel vorgesehene Entlüftungsöffnung (17) aufweisen, drei oder mehr beträgt,
wobei zumindest zwei Nabenelemente (5h, 5j, 5n), die an beiden Enden in einer Scheibendrehrichtung angeordnet sind, näher an einem Scheibenrotor als die anderen Nabenelemente (5k) vorgesehen sind, und
wobei jedes der Nabenelemente (5k), die jeweils die Entlüftungsöffnung (17) aufweisen, mit einer Auflagefläche (S3) für eine in die Entlüftungsöffnung (17) einzuschraubende Entlüftungsschraube (18) versehen ist, eine Hohlschraube (20) in jedes der Nabenelemente (5h, 5j, 5n), die jeweils die Verbindungsöffnung (14, 16) aufweisen, über einen Hohlkörper (19) mit einem Schlauchanschlusselement (19a) eingeschraubt ist, jedes der Nabenelemente (5h, 5j, 5n), die jeweils die Verbindungsöffnung (14, 16) aufweisen, mit einer Auflagefläche (S1, S2) für die in die Verbindungsöffnung (14, 16) einzuschraubende Hohlschraube (20) versehen ist, wobei die Auflagefläche (S1, S2) für die Hohlschraube (20) in Scheibenradialrichtung des Hohlkörpers (19) nach außen gerichtet angeordnet ist, **dadurch gekennzeichnet, dass** die Auflagefläche (S1) des Nabenelements (5h), das an einem Ende in der Scheibendrehrichtung angeordnet ist und die Auflagefläche (S2) des Nabenelements (5j, 5n), das am anderen Ende in Scheibendrehrichtung angeordnet ist, in der Scheibenradialrichtung der Auflagefläche (S3) des daran angrenzenden Nabenelements (5k) nach außen vorragen.

2. Fahrzeugscheibenbremse (1) nach Anspruch 1,
wobei das Nabenelement (5j, 5n), das an dem anderen Ende in der Scheibendrehrichtung angeordnet ist, das Nabenelement (5j, 5n) mit der Verbindungsöffnung (14, 16) ist, und ein Zwischenraum, der zum Aufnehmen des Schlauchanschlusselements (19a) des Hohlkörpers (19) imstande ist, zwischen der Entlüftungsschraube (18) oder der Hohlschraube (20), die im daran angrenzenden Nabenelement (5k) vorgesehen ist, und einer Außenfläche des Bremssattelkörpers (5) vorgesehen ist.

3. Fahrzeugscheibenbremse (1) nach Anspruch 1 oder 2,
wobei des Nabenelement (5h), das an dem einen Ende in der Scheibendrehrichtung angeordnet ist, das Nabenelement (5h) mit der Verbindungsöffnung (14, 16) ist, und der Hohlkörper (19) eine davon vorragende Drehsperre (19d) aufweist, wobei die Drehsperre (19d) den Hohlkörper (19) dadurch sperrt, dass diese mit dem angrenzenden Nabenelement (5k) in Berührung kommt.

## Revendications

1. Frein à disque de véhicule (1) ayant, sur un côté périphérique externe de disque (2) d'une partie d'action (5a) d'un corps d'étrier (5) ayant un trou de cylindre (5d, 5e, 5f) dans lequel un piston (7, 8, 9) est inséré, des parties de bossage (5h, 5j, 5n) ayant chacune un trou de raccordement (14, 16) à travers lequel un fluide de fonctionnement sous pression est introduit dans une chambre hydraulique (10, 11, 12) prévue entre un fond du trou de cylindre (5d, 5e, 5f) et le piston (7, 8, 9) et des parties de bossage (5k) ayant chacune un trou de purge (17) à travers lequel l'air contenu dans un fluide de fonctionnement est évacué,
un nombre total des parties de bossage (5h, 5j, 5n) ayant chacune le trou de raccordement (14, 16) et les parties de bossage (5k) ayant chacune le trou de purge (17) prévues en parallèle étant trois ou plus,
dans lequel au moins deux parties de bossage (5h, 5j, 5n) disposées au niveau des deux extrémités dans une direction de rotation de disque sont prévues plus près d'un rotor de disque que les autres parties de bossage (5k), et
dans lequel chacune des parties de bossage (5k) ayant chacune le trou de purge (17) est pourvue d'une surface d'appui (S3) pour une vis de purge (18) devant être vissée dans le trou de purge (17), un boulon creux de raccord (20) est vissé dans chacune des parties de bossage (5h, 5j, 5n) ayant chacune le trou de raccordement (14, 16) par un raccord banjo (19) ayant une partie de liaison de tuyau (19a), chacune des parties de bossage (5h, 5j, 5n) ayant chacune le trou de raccordement (14, 16) est pourvue d'une surface d'appui (S1, S2) pour le boulon creux de raccord (20) devant être vissé dans le trou de raccordement (14, 16), la surface d'appui (S1, S2) pour le boulon creux de raccord (20) étant disposée vers l'extérieur dans une direction radiale de disque du raccord banjo (19),
**caractérisé en ce que**
la surface d'appui (S1) de la partie de bossage (5h) disposée au niveau d'une première extrémité dans la direction de rotation de disque et la surface d'appui (S2) de la partie de bossage (5j, 5n) disposée au niveau de l'autre extrémité dans la direction de rotation de disque font saillie vers l'extérieur dans la direction radiale de disque de la surface d'appui (S3) de la partie de bossage (5k) adjacente à celles-ci.

2. Frein à disque de véhicule (1) selon la revendication 1,
dans lequel la partie de bossage (5j, 5n) disposée au niveau de l'autre extrémité dans la direction de rotation de disque est la partie de bossage (5j, 5n) ayant le trou de raccordement (14, 16) et un espace capable de recevoir la partie de liaison de tuyau (19a) du raccord banjo (19) est prévu entre la vis de purge (18) ou le boulon creux de raccord (20) prévu(e) dans la partie de bossage (5k) adjacente à celui-ci/celle-ci et une surface externe du corps d'étrier (5).

3. Frein à disque de véhicule (1) selon la revendication 1 ou 2,
dans lequel la partie de bossage (5h) disposée au niveau de la première extrémité dans la direction de rotation de disque est la partie de bossage (5h) ayant le trou de raccordement (14, 16) et le raccord banjo (19) a une butée de rotation (19d) faisant saillie à partir de celui-ci, la butée de rotation (19d) bloquant le raccord banjo (19) en entrant en contact avec la partie de bossage (5k) adjacente à celui-ci.
